# EUROPÄISCHE PATENTSCHRIFT

(11) **EP 1 880 792 B1**
(45) Veröffentlichungstag und Bekanntmachung des Hinweises auf die Patenterteilung: **02.06.2010**
(21) Anmeldenummer: 07005524.9
(22) Anmeldetag: 17.03.2007
(51) Int. Cl.: B23K 31/02

(54) **Anordnung zur elektrischen Verbindung von Elementen einer Fahrzeugkarosserie**
Assembly for electrical connection of elements of a car body
Dispositif destiné à la liaison électrique d'éléments d'une carrosserie de véhicule automobile

(30) Priorität: 31.03.2006 DE 102006014988
(43) Veröffentlichungstag der Anmeldung: 23.01.2008
(73) Patentinhaber: Dr. Ing. h.c. F. Porsche AG, 70435 Stuttgart (DE)
(72) Erfinder: Schiebel, Dieter, 70825 Korntal-Münchingen (DE); Paul, Joachim, 70563 Stuttgart (DE)

(56) Entgegenhaltungen:
- DE-A1- 4 240 824
- DE-A1- 10 231 100
- DE-A1- 10 233 650

## Beschreibung

Die vorliegende Erfindung bezieht sich auf eine Anordnung zur elektrischen Verbindung von Trägerelementen einer Fahrzeugkarosserie.

Obwohl auf beliebige Fahrzeuge und Fahrzeugkarosserien anwendbar, werden die vorliegende Erfindung sowie die ihr zugrunde liegende Problematik in Bezug auf eine elektrische Verbindung zwischen einem Rohbauabschnitt aus Aluminium und einem Rohbauabschnitt aus Stahl einer Fahrzeugkarosserie näher erläutert.

Anordnungen zur elektrischen Verbindung von Bauteilen und verschiedenen Karosseriebauteilen sowie von Karosseriebauteilen untereinander sind im modernen Fahrzeugbau hinlänglich bekannt, wie zum Beispiel so genannte Massebänder aus Kupfergeflecht, welche an den betreffenden Bauteilabschnitten zum Beispiel angeschraubt, angenietet oder angesteckt sind. Damit ist ein relativ hoher Fertigungs- und Installationsaufwand verbunden.

Weiterhin ist es nicht nur im Rahmen der EMV-Gesetzgebung hinsichtlich Störab- und - einstrahlungsfestigkeit von elektronischen Geräten in einem Fahrzeug unablässig, verlässliche elektrische Verbindungen, zum Beispiel als Massekontakte von Karosseriebauteilen mit hoher Stromtragfähigkeit zu verwenden.

Es wurden bereits verschiedene Lösungen zur Verbindung von Bauteilen aus unterschiedlichen Werkstoffen beschrieben, wie zum Beispiel DE 42 40 824 A1 eine Schweißverbindung eines Stahlblechbauteils mit einem Aluminiumblechbauteil mittels eines Zusatzbauteils lehrt. Das Zusatzbauteil weist im Bereich der Anlage am Stahlblech einen Stahlbelag und im Bereich der Anlage am Aluminiumbauteil einen Aluminiumbelag auf. Das Zusatzteil kann aus Stahlblech sein, wobei der Aluminiumbelag durch Walzplattierung aufgebracht ist. DE 10231100 A1 zeigt eine Schweißverbindung eines Bauteils aus Edelstahl mit einem Bauteil aus einer Aluminiumlegierung mittels eines Verbindungselements das aus mehrschichtigem Metall besteht.

Die meisten konzentrieren sich dabei auf die Stabilität und hohe Kraftübertragungseigenschaft und Krafteinleitungseigenschaft des Verbindungsteils, die jedoch für eine elektrische Verbindung unter Umständen auch vom wirtschaftlichen Gesichtspunkt her nachteilig sein kann.

Somit liegt der vorliegenden Erfindung die Aufgabe zugrunde, Anordnung zur elektrischen Verbindung von Elementen einer Fahrzeugkarosserie zu schaffen, welche die obengenannten Nachteile beseitigt und insbesondere gegenüber vorbekannten Strukturen wirtschaftlicher ist und eine wirksamere elektrische Verbindung herstellt.

### VORTEILE DER ERFINDUNG

Diese Aufgabe wird erfindungsgemäß durch die Verbindungsanordnung mit den Merkmalen gemäß Patentanspruch 1 gelöst.

Die der vorliegenden Erfindung zugrunde liegende Idee besteht darin, dass eine Anordnung zur elektrischen Verbindung eines ersten Bauteils einer Fahrzeugkarosserie aus einem ersten elektrisch leitenden Werkstoff und eines zweiten Bauteils der Fahrzeugkarosserie aus einem zweiten, sich von dem ersten Werkstoff unterscheidenden elektrisch leitenden Werkstoff mit einem Verbindungselement ausgebildet ist, welches einen ersten Verbindungsabschnitt aus dem ersten Werkstoff und einen zweiten Verbindungsabschnitt aus dem zweiten Werkstoff aufweist, und welches derart verformbar ausgebildet ist, dass der erste Verbindungsabschnitt für eine feste Anbindung an dem ersten Bauteil mit demselben und der zweite Verbindungsabschnitt für eine feste Anbindung an dem zweiten Bauteil mit demselben in Anlage bringbar ist.

Die vorliegende Erfindung weist gegenüber den oben genannten Ansätzen dadurch einen besonderen wirtschaftlichen Vorteil auf. Besonders bevorzugt ist es, dass das Verbindungselement aus walzplattierten Schichten besteht, wodurch die Herstellung vorteilhaft automatisiert sein kann.

Des Weiteren wird somit der Installationsaufwand erleichtert sowie die Herstellungskosten und das Herstellungsverfahren des Verbindungsteils optimiert. Die Installation und Anbringung kann in einer automatischen Fertigung eingebunden werden. Für die Installation ist kein Anbohren der Bauteile wie zur Anbringung von Massebändern mehr erforderlich. Außerdem entfallen alle Kleinteile zur Anbringung von Massebändern wie Schrauben, Muttern, Sicherungsscheiben.

In den Unteransprüchen finden sich vorteilhafte Ausgestaltungen und Verbesserungen der im Patentanspruch 1 angegebenen Anordnung zur elektrischen Verbindung.

Durch eine stoffschlüssige Verbindung des Verbindungselementes mit den zu verbindenden Bauelementen wird zum Beispiel durch ein geeignetes Schweißverfahren eine besonders verlässliche elektrische Verbindung erreicht.

Das Verbindungselement weist einen S-förmigen Querschnitt auf, wodurch es eine besondere flexible Anpassungsfähigkeit an unterschiedliche Anordnungsgeometrien von Bauteilen besitzt. Durch die S-förmige Ausführung der Enden des Verbindungselementes besteht ein Vorteil darin, dass in den Verbindungsbereichen durch die Krümmung der Enden immer ein geöffneter Abschnitt zum Anbringen einer stoffschlüssigen Verbindung als Schweißnaht vorhanden ist. Dadurch verringert sich der Umfang der Schweißnahtvorbereitungsarbeiten.

Durch eine Ausbildung als Endlosware kann das Verbindungselement in einfacher Weise abgelängt hergestellt werden. In alternativer Ausgestaltung ist das Verbindungselement durch eine Umformung aus Bandmaterial hergestellt. Es kann für einen großen Einsatzbereich verwendet werden. Durch die variable Ablängung des streifenförmigen Verbindungselementes ist eine einfache Anpassung des Verbindungselementes an die zu übertragende Stromstärke möglich.

Da das Verbindungselement keine Kräfte übertragen muss, kann es besonders einfach dem Anwendungsfall durch geeignete Umformverfahren angepasst werden.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine Schnittansicht einer Anordnung zur elektrischen Verbindung gemäß einem ersten Ausführungsbeispiel der vorliegenden Erfindung;
- Figur 2: eine perspektivische Ansicht eines Verbindungselementes;
- Figur 3: eine Schnittansicht eines weiteren Ausführungsbeispiels eines Verbindungselementes der vorliegenden Erfindung; und
- Figur 4: eine schematische Draufsicht auf verschiedene Verbindungsanordnungen.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

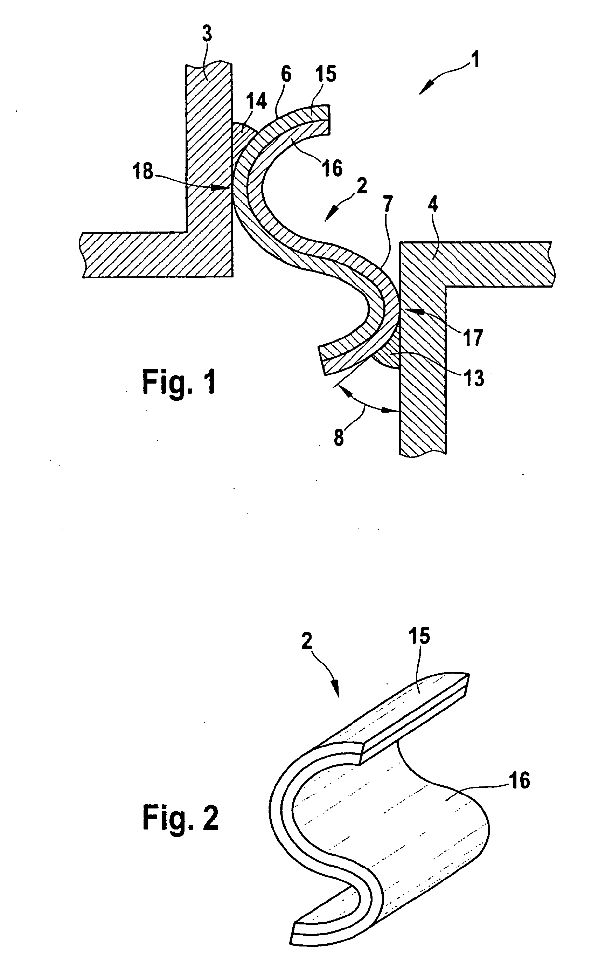

Figur 1 stellt eine schematische Ansicht im Schnitt dar, wobei eine Anordnung 1 zur elektrischen Verbindung von zwei Bauteilen 3, 4 einer Fahrzeugkarosserie gezeigt ist. Die beiden Bauteile 3, 4 sind zum Beispiel Rohbauabschnitte, welche mittels eines Verbindungselementes 2 elektrisch verbunden sind. Die elektrische Verbindung kann eine Masseverbindung sein, welche die Karosserieteile auf ein festgelegtes Massepotenzial legt, um so definierte, gleiche elektrische Potenziale der Bauteile 3, 4 zu erhalten. Die Bauteile 3, 4 sind Komponenten einer Hybridbauweise einer Karosserie aus Stahl und Aluminium. In diesem Beispiel besteht das erste Bauteil 3 aus Stahl und das zweite Bauteil 4 aus Aluminium.

Kraftschlüssige Verbindungen zur Übertragung von Kräften sind zwischen den Bauteilen 3, 4 in geeigneter Ausführung vorhanden, aber nicht dargestellt. Das Verbindungselement 2 ist eine ausschließlich elektrische Verbindung.

Das Verbindungselement 2 ist im Querschnitt bevorzugt S-förmig ausgebildet, was ihm eine bestimmte Flexibilität für unterschiedliche Zwecke verleiht. Die S-Form weist eine erste Krümmung 6 und eine zweite Krümmung 7 auf, welche beide gleiche oder auch unterschiedliche Krümmungsradien besitzen können.

Ein erster Verbindungsabschnitt 17 und ein zweiter Verbindungsabschnitt 18 sind jeweils im Bereich eines gekrümmten Endes des Verbindungselementes 2 mit jeweils einem ersten Bauteil 3 und einem zweiten Bauteil 4 verbunden. Das Verbindungselement 2 besteht aus zwei Schichten 15, 16, wobei die erste Schicht 15 aus Stahl und die zweite Schicht 16 aus Aluminium besteht. Diese Schichten 15, 16 sind übereinander angeordnet und miteinander in einer geeigneten Weise verbunden. Bevorzugt ist eine Walzplattierung der beiden Schichten 15, 16, welche in Serie automatisch ausgeführt werden kann.

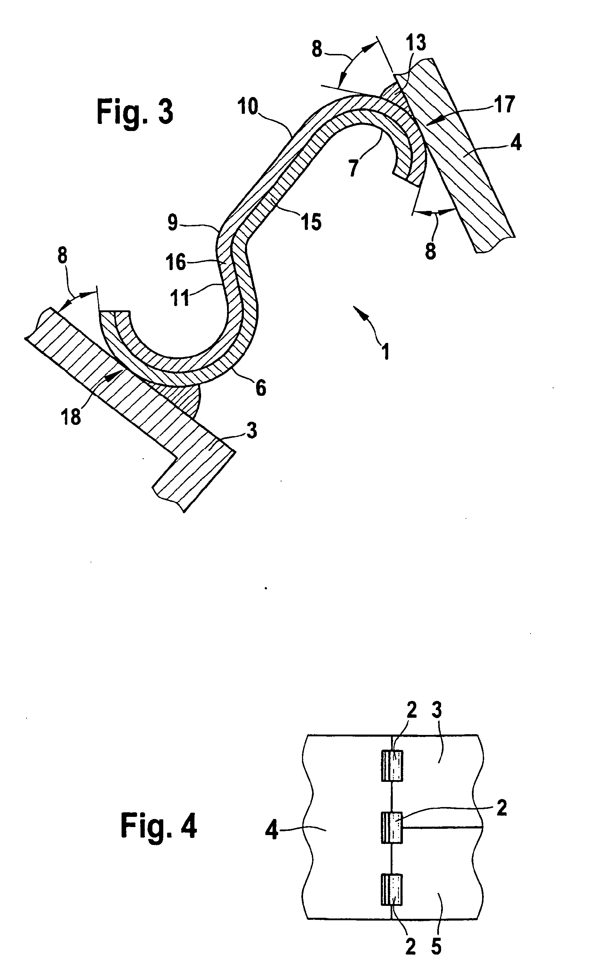

Durch die Krümmungen 5, 6 der S-Form des Verbindungselementes 2 ergeben sich bei der Auflage auf dem jeweiligen Bauteil 3, 4 vorteilhaft Nahtwinkel 8 (siehe Figur 3), die ein Aufbringen einer Schweißnaht 13, 14 zwischen dem jeweiligen Verbindungsabschnitt 17, 18 des Verbindungselementes 2 und dem jeweiligen Bauteil 3, 4 erleichtern. Ein solcher Nahtwinkel erspart eine Vorbehandlung der Schweißstelle hinsichtlich eines entsprechenden Winkels.

Das S-förmige Verbindungselement 2 ist in der Figur 2 perspektivisch in Form eines Streifens dargestellt. Es wird bevorzugt als Endlosware hergestellt und auf eine bestimmte Länge abgelängt, was beides automatisiert erfolgt. Dadurch ist eine besonders große Anpassungsfähigkeit an unterschiedliche Einsatzfälle ermöglicht.

Die Walzplattierung der beiden Schichten 15, 16 des Verbindungselementes 2 gestattet eine innige Verbindung der beiden Werkstoffe Stahl und Aluminium für einen guten Stromübergang. Durch die Streifenform wird eine besonders verlässliche große Stromtragfähigkeit ermöglicht.

Die S-Form des Verbindungselementes 2 ermöglicht auch eine teilweise Umformung des Verbindungselementes 2 zur Anpassung an unterschiedliche Einsatzfälle. Auch eine Variation der Krümmungen 6, 7 kann dazu dienen. Ein Beispiel dazu zeigt Figur 3.

Ein weiteres Ausführungsbeispiel eines Verbindungselementes 2 ist in Figur 3 dargestellt. Das Verbindungselement 2 weist hier in seinem mittleren Bereich eine Knickstelle 9 auf, an die sich auf beiden Seiten jeweils ein gerader Längsabschnitt 10 und 11 anschließt. An den Enden der Längsabschnitte 10, 11 sind die Krümmungen 6, 7 angeordnet, wobei deren Enden so ausgebildet sind, dass sich ein geeigneter Nahtwinkel 8 für die jeweilige Schweißnaht 13, 14 ergibt.

Die Streifenform des Verbindungselementes 2 gestattet es außerdem, zum Beispiel auch Nahtstellen von mehr als zwei Bauteilen gleichen Werkstoffs auf einer Seite elektrisch zu verbinden, wie in einem Beispiel in Figur 4 gezeigt ist. Hier ist eine schematische Draufsicht auf drei Bauteile 3, 4, 5 dargestellt, wobei die Bauteile 3 und 5 beide aus Stahl und Bauteil 4 aus Aluminium hergestellt ist. Das Verbindungselement 2 in der Mitte stellt auf der einen Seite durch seine Länge eine Verbindung der Bauteile 3 und 5 und auf der anderen Seite gleichzeitig eine Verbindung mit Bauteil 4 her.

Das Verbindungselement 2 verbindet somit durch seine zwei Schichten 15 und 16 zwei Bauteile unterschiedlicher Werkstoffe elektrisch, indem werkstoffgleiche, stoffschlüssige Verbindungen 13, 14 hergestellt werden, die eine hohe Stromtragfähigkeit aufweisen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Zum Beispiel ist es möglich, das Verbindungselement 2 mit Aussparungen bzw. Ausstanzungen zu versehen, um bestimmte Applikationen zu erleichtern. Da das Verbindungselement 2 zur elektrischen Verbindung dient, ist es nicht notwendig, dieses in einer solchen massiven Art für besonders hohe Festigkeitseigenschaften auszuführen. Wenn durch eine Aussparung die Stromtragfähigkeit verringert wird, ist es vorteilhaft einfach, das Verbindungselement 2 als einen längeren Streifen abzulängen.

## Patentansprüche

1. Anordnung (1) zur elektrischen Verbindung eines ersten Bauteils (3) einer Fahrzeugkarosserie aus einem ersten elektrisch leitenden Werkstoff und eines zweiten Bauteils (4) der Fahrzeugkarosserie aus einem zweiten, sich von dem ersten Werkstoff unterscheidenden elektrisch leitenden Werkstoff mit einem Verbindungselement (2), welches einen ersten Verbindungsabschnitt (17) aus dem ersten Werkstoff und einen zweiten Verbindungsabschnitt (18) aus dem zweiten Werkstoff aufweist, und welches derart verformt ist, dass der erste Verbindungsabschnitt (17) für eine feste stoffschlüssige Anbindung an dem ersten Bauteil (3) mit demselben und der zweite Verbindungsabschnitt (18) für eine feste stoffschlüssige Anbindung an dem zweiten Bauteil (4) mit demselben in Anlage ist, **dadurch gekennzeichnet, dass** der erste und zweite Verbindungsabschnitt (17, 18) jeweils im Bereich eines gekrümmten Endes des Verbindungselements (2) mit jeweils dem ersten und zweiten Bauteil (3, 4) verbunden ist, so dass die Verbindungsabschnitte (17, 18) des Verbindungselementes (2) jeweils mit einem Nahtwinkel (8) ausgebildet sind, in den jeweils eine Schweißnaht (13, 14) eingebracht ist.

2. Anordnung (1) nach Anspruch 1, **dadurch gekennzeichnet, dass** das Verbindungselement (2) aus zwei übereinander angeordneten Schichten (15, 16) aufgebaut ist, wobei die erste Schicht (15) aus dem ersten Werkstoff und die zweite Schicht (16) aus dem zweiten Werkstoff besteht.

3. Anordnung (1) nach einem der Ansprüche 1 oder 2, **dadurch gekennzeichnet, dass** das Verbindungselement (2) einen S-förmigen Querschnitt aufweist.

4. Anordnung (1) nach einem der Ansprüche 1 oder 2, **dadurch gekennzeichnet, dass** das Verbindungselement (2) einen S-förmigen Querschnitt mit mindestens einem Längsabschnitt (10, 11) aufweist.

5. Anordnung (1) nach einem der Ansprüche 1 bis 4, **dadurch gekennzeichnet, dass** die Schichten (15, 16) des Verbindungselementes (2) metallisch ausgebildet sind.

6. Anordnung (1) nach Anspruch 5, **dadurch gekennzeichnet, dass** die erste Schicht (15) des Verbindungselementes (2) Stahl und die zweite Schicht (16) Aluminium ist.

7. Anordnung (1) nach Anspruch 6, **dadurch gekennzeichnet, dass** das Verbindungselement (2) aus walzplattierten Schichten (15, 16) besteht.

8. Anordnung (1) nach einem der Ansprüche 1 bis 7, **dadurch gekennzeichnet, dass** das Verbindungselement (2) streifenförmig als Endlosware ablängbar ausgebildet ist.

9. Anordnung (1) nach einem der Ansprüche 1 bis 7, **dadurch gekennzeichnet, dass** das Verbindungselement (2) durch Umformung aus Bandmaterial hergestellt ist.

## Claims

1. Arrangement (1) for electrically connecting a first component (3) of a vehicle body, which component is composed of a first electrically conductive material, and a second component (4) of the vehicle body, which component is composed of a second electrically conductive material which is different from the first material, by way of a connecting element (2) which has a first connecting section (17), which is composed of the first material, and a second connecting section (18), which is composed of the second material, and which connecting element is deformed in such a way that the first connecting section (17) butts against the first component (3) in order to be firmly cohesively connected to the said first component and the second connecting section (18) butts against the second component (4) in order to be firmly cohesively connected to the said second component, **characterized in that** the first and second connecting sections (17, 18) are each connected to the respective first and second component (3, 4) in the region of a bent end of the connecting element (2), and therefore the connecting sections (17, 18) of the connecting element (2) are each formed with a seam angle (8) into which a weld seam (13, 14) is introduced in each case.

2. Arrangement (1) according to Claim 1, **characterized in that** the connecting element (2) is constructed from two layers (15, 16) which are arranged one above the other, the first layer (15) being composed of the first material and the second layer (16) being composed of the second material.

3. Arrangement (1) according to either of Claims 1 and 2, **characterized in that** the connecting element (2) has an S-shaped cross section.

4. Arrangement (1) according to either of Claims 1 and 2, **characterized in that** the connecting element (2) has an S-shaped cross section with at least one longitudinal section (10, 11).

5. Arrangement (1) according to one of Claims 1 to 4, **characterized in that** the layers (15, 16) of the connecting element (2) are formed from metal.

6. Arrangement (1) according to Claim 5, **characterized in that** the first layer (15) of the connecting element (2) is steel and the second layer (16) is aluminium.

7. Arrangement (1) according to Claim 6, **characterized in that** the connecting element (2) comprises roll-clad layers (15, 16).

8. Arrangement (1) according to one of Claims 1 to 7, **characterized in that** the connecting element (2) is in the form of a tape-like continuous product which can be cut to length.

9. Arrangement (1) according to one of Claims 1 to 7, **characterized in that** the connecting element (2) is produced from strip material by deformation.

## Revendications

1. Dispositif (1) destiné à la liaison électrique d'un premier composant (3) d'une carrosserie de véhicule automobile en un premier matériau électriquement conducteur et d'un deuxième composant (4) de la carrosserie de véhicule automobile en un deuxième matériau électriquement conducteur, différent du premier matériau électriquement conducteur, avec un élément de liaison (2), qui comprend une première partie de liaison (17) constituée du premier matériau et une deuxième partie de liaison (18) constituée du deuxième matériau, et qui est déformé de telle manière que la première partie de liaison (17) soit appliquée sur le premier composant (3) en vue d'une jonction solide par complémentarité de matière avec celui-ci et que la deuxième partie de liaison (18) soit appliquée sur le deuxième composant (4) en vue d'une jonction solide par complémentarité de matière avec celui-ci, **caractérisé en ce que** la première et la deuxième parties de liaison (17, 18) sont respectivement jointes au premier et au deuxième composant (3, 4) chaque fois dans la région d'une extrémité courbe de l'élément de liaison (2), de telle manière que les parties de liaison (17, 18) de l'élément de liaison (2) soient respectivement réalisées avec un angle de soudure (8), dans lequel un cordon de soudure (13, 14) est chaque fois déposé.

2. Dispositif (1) selon la revendication 1, **caractérisé en ce que** l'élément de liaison (2) est formé de deux couches superposées (15, 16), dans lequel la première couche (15) se compose du premier matériau et la deuxième couche (16) se compose du deuxième matériau.

3. Dispositif (1) selon l'une quelconque des revendications 1 ou 2, **caractérisé en ce que** l'élément de liaison (2) présente une section transversale en forme de S.

4. Dispositif (1) selon l'une quelconque des revendications 1 ou 2, **caractérisé en ce que** l'élément de liaison (2) présente une section transversale en forme de S avec au moins une partie allongée (10, 11).

5. Dispositif (1) selon l'une quelconque des revendications 1 à 4, **caractérisé en ce que** les couches (15, 16) de l'élément de liaison (2) sont métalliques.

6. Dispositif (1) selon la revendication 5, **caractérisé en ce que** la première couche (15) de l'élément de liaison (2) est en acier et la deuxième couche (16) est en aluminium.

7. Dispositif (1) selon la revendication 6, **caractérisé en ce que** l'élément de liaison (2) se compose de couches plaquées par laminage (15, 16).

8. Dispositif (1) selon l'une quelconque des revendications 1 à 7, **caractérisé en ce que** l'élément de liaison (2) est réalisé sous la forme d'une bande sans fin apte à être coupée à longueur.

9. Dispositif (1) selon l'une quelconque des revendications 1 à 7, **caractérisé en ce que** l'élément de liaison (2) est fabriqué par déformation d'une matière en bande.
